Europäisches Patentamt

European Patent Office

Office européen des brevets

(11) Numéro de publication: **0 021 947**
A1

## (12) DEMANDE DE BREVET EUROPEEN

(21) Numéro de dépôt: **80400840.7**

(22) Date de dépôt: **10.06.80**

(51) Int. Cl.³: **E 04 H 5/12**
**F 28 C 1/00**

(30) Priorité: **20.06.79 FR 7915764**

(43) Date de publication de la demande:
**07.01.81 Bulletin 81/1**

(84) Etats Contractants Désignés:
**AT BE CH DE GB IT LI LU NL SE**

(71) Demandeur: **COIGNET S.A.**
**9-13 avenue Myron T. Herrick**
**F-75008 Paris(FR)**

(72) Inventeur: **Fougea, Bernard**
**94 boulevard Maurice Barrès**
**F-92200 Neuilly-Sur-Seine(FR)**

(74) Mandataire: **CABINET BONNET-THIRION**
**95 Boulevard Beaumarchais**
**F-75003 Paris(FR)**

(54) Ossature intérieure du groupe de ventilation de réfrigérants atmosphériques à tirage induit.

(57) Ossature intérieure du groupe de ventilation de réfrigérants atmosphériques à tirage induit.

Dans un tel réfrigérant avec une ossature extérieure de
dispersion en couronne, le groupe de ventilation est constitué
par une ossature intérieure concentrique avec, entre une tour
hexagonale centrale (2) et une poutre de rigidité circonférentielle (1) sur poteaux, un plancher monolithique dans lequel
sont ménagées les cellules de ventilateurs (3) et qui supporte
des diffuseurs (8) et les groupes moteurs en prenant appui sur
une pluralité de poteaux préfabriqués (5,7,9) situés au sommet d'un réseau en mailles hexagonales se développant à
partir des côtés de la tour (2).

Application: réfrigérants atmosphériques à tirage induit.

FIG. 1

## Ossature intérieure du groupe de ventilation de réfrigérants atmosphériques à tirage induit

La présente invention a pour objet un perfectionnement apporté à l'ossature intérieure du groupe de ventilation de réfrigérants atmosphériques à tirage induit.

On rappellera qu'un tel réfrigérant est essentiellement constitué par une ossature extérieure de dispersion, portant le bassin d'alimentation et une ossature intérieure portant une pluralité de cellules de ventilateurs, ces deux structures étant reliées par une toiture de raccordement.

L'invention vise à apporter une solution aux problèmes ci-après :

- simplification de la structure dans la zone des ventilateurs en la préfabriquant en totalité ;

- amélioration des caractéristiques aérodynamiques de cette structure ;

- implantation optimale des ventilateurs avec diminution de leur entr'axe et, par voie de conséquence, du diamètre du groupe de ventilation ;

- standardisation maximale des éléments préfabriqués.

Sur un plan général, on soulignera que les assemblages des éléments préfabriqués visent à un monolithisme global de la construction en béton armé afin de lui permettre de supporter en sécurité les efforts horizontaux engendrés par les séismes et à éviter au maximum le coulage en place de joints en béton armé de petites dimensions.

A cet effet, l'invention propose un réfrigérant atmosphérique à tirage induit du type comportant, séparée par une toiture de raccordement, une ossature extérieure de dispersion en forme de couronne supportant un bassin d'alimentation de même forme, un groupe de ventilation constitué par une ossature intérieure concentrique à la première supportant une pluralité de cellules de ventilateur dont chacune comporte un groupe moteur entouré et surmonté d'un diffuseur en forme de solide de révolution, qui est caractérisé en ce que ladite ossature intérieure est constituée, entre une tour hexagonale centrale et une poutre de rigidité circonférentielle concentriques, celle-ci reposant sur des poteaux uniformément répartis, par un plancher monolithique dans lequel sont ménagées les cellules de ventilateur, plancher supportant lesdits diffuseurs et les groupes moteurs et prenant appui sur une pluralité de poteaux préfabriqués à chapiteau situés aux sommets d'un réseau en mailles hexagonales se développant à partir des côtés de ladite tour hexagonale centrale.

Selon une caractéristique de l'invention, lesdits groupes moteurs des cellules de ventilateur sont implantés sur des poteaux situés au centre desdites mailles hexagonales selon un réseau à mailles triangulaires équilatérales.

Avantageusement, chaque cellule de ventilateur, comportant un poteau central support du groupe moteur et six poteaux périphériques implantés aux sommets de la maille hexagonale circonscrite, est constituée par trois poutres préfabriquées assemblées en étoile régulière en partant dudit poteau central vers trois premiers desdits poteaux périphériques et par un élément périphérique profilé formant base circulaire du diffuseur associé.

Grâce à cette structure en mailles, on parvient précisément à un regroupement très important des ventilateurs, la forme des éléments constitutifs de la structure et leur mode d'assemblage, qui seront décrits plus loin, permettant de rétablir le monolithisme de l'ensemble.

Selon une autre caractéristique de l'invention, ledit élément profilé affecte la forme d'un anneau dont la section droite définit une face extérieure courbe limitée par une arête supérieure circulaire et par une arête inférieure polygonale régulière, sa face intérieure étant constituée par une pluralité de facettes circonscrites audit anneau.

Ces éléments ont été étudiés pour présenter une rigidité maximum et constituent une solution élégante au problème de la standardisation des éléments préfabriqués.

Avantageusement, chaque anneau est constitué par l'assemblage d'au moins trois secteurs identiques s'étendant entre deux successives desdites poutres préfabriquées ; au droit desdites poutres préfabriquées, chacun desdits secteurs présente sur sa face inférieure une extension formant pied d'assise sur la poutre associée.

Selon une autre caractéristique encore de l'invention, au niveau des trois seconds desdits poteaux périphériques, les éléments profilés de trois cellules adjacentes sont associés, par un des côtés de leur arête inférieure polygonale, à une dalle triangulaire équilatérale formant coffrage perdu et reposant sur l'un desdits seconds poteaux périphériques.

Préférentiellement, lesdits diffuseurs sont constitués chacun par une pluralité de viroles préfabriquées successivement empilées, s'emboîtant l'une sur l'autre, sur les bords des éléments profilés en auget formant base, l'étanchéité des joints étant assurée par un mortier-colle.

On insistera encore sur l'avantage de cette conception des diffuseurs, permettant la réalisation au sol des viroles avec une excellente précision.

D'autres caractéristiques et avantages de l'invention ressortiront d'ailleurs de la description qui va suivre, à titre d'exemple non limitatif, d'une forme de réalisation de l'invention en référence aux dessins annexés dans lesquels :

la figure 1 est une vue d'ensemble en plan du groupe de ventilation ;

la figure 2 est une vue du détail II de la figure 1 ;

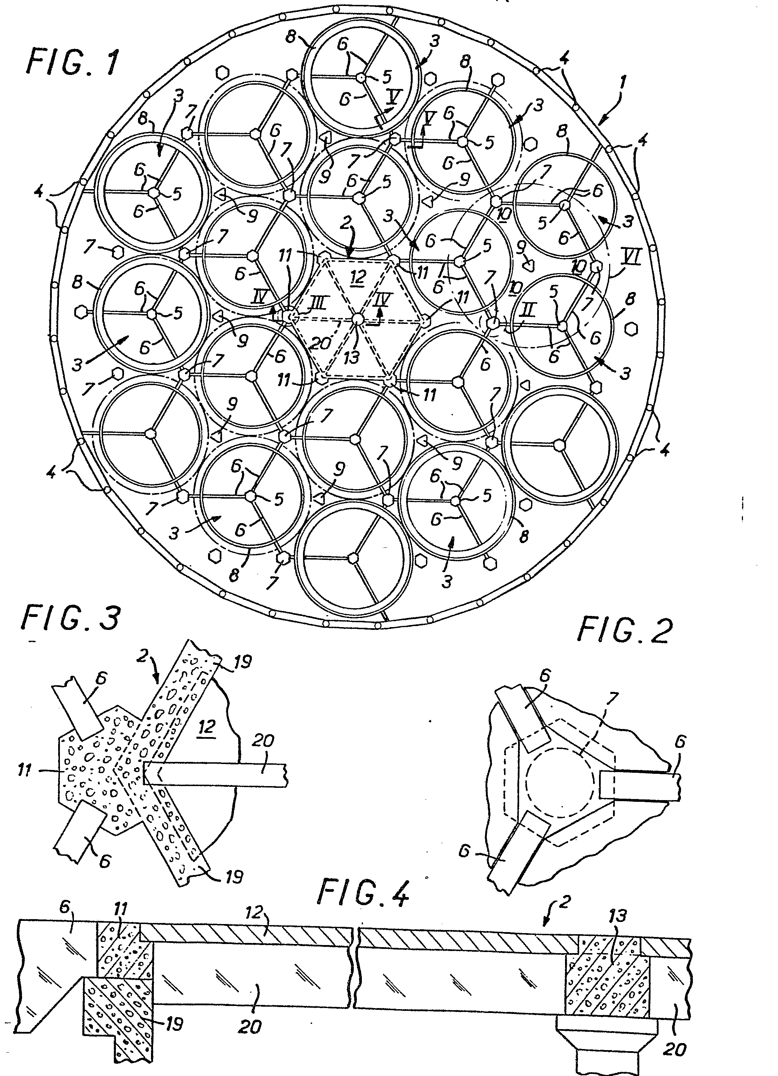

. la figure 3 est une vue par dessous du détail III de la figure 1 ;

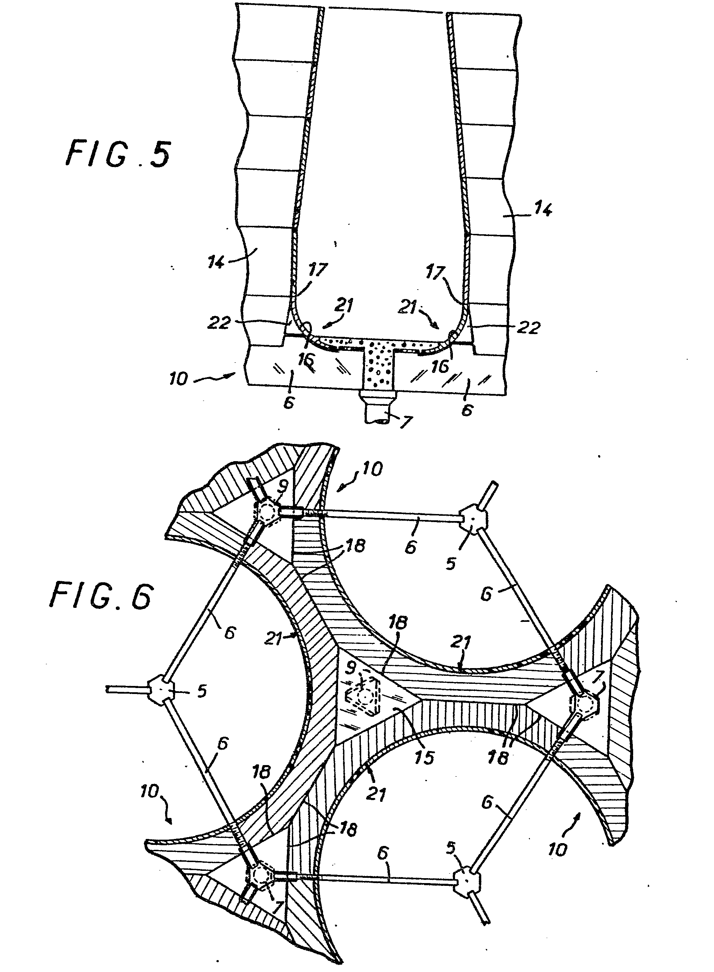

la figure 4 est une vue en coupe selon IV-IV de la figure 1 ;

la figure 5 est une vue en coupe selon V-V de la figure 1 ;

. la figure 6 est une vue du détail VI de la figure 1.

4

La figure 1 constitue une vue d'ensemble du groupe de ventilation et montre, entre la poutre de rigidité circonférentielle 1 et la tour hexagonale centrale 2, la pluralité de cellules de ventilateur 3, tous ces éléments étant ainsi désignés dans leur ensemble.

On soulignera que :

- les dessins ne comportent pas les éléments constitutifs des groupes moto-ventilateurs proprement dits.

- la description est limitée, pour des raisons de simplification aux seuls éléments de la structure mettant en évidence les caractéristiques de l'invention, certains détails d'assemblage et le fonctionnement de l'ensemble étant bien connus de l'homme de l'art.

En revenant à la figure 1, on définira les éléments ci-après : en 4, les poteaux uniformément répartis supportant la poutre de rigidité circonférentielle 1, en 5, les poteaux centraux des cellules 3 destinés à recevoir le groupe moteur du ventilateur, en 6, les poutres préfabriquées en étoile reliant les poteaux centraux 5 aux poteaux périphériques 7, en 8, les diffuseurs des cellules 3, désignés dans leur ensemble, en 9, les poteaux périphériques constituant point de support et de jonction des éléments profilés 10 (figure 6), en 11, les poteaux de la tour centrale 2 recouverte d'une dalle 12.

On notera que les cellules 3 se développent autour de la tour centrale 2 de la façon suivante : à partir des côtés de la dalle 12 de la tour 2, les poteaux des types 11, 7 et 9 sont successivement implantés aux sommets d'un réseau à mailles hexagonales dont chacune est circonscrite à un poteau central 5, ces poteaux 5 étant situés eux-mêmes aux sommets d'un réseau à mailles triangulaires équilatérales. Il se crée ainsi une première série de cellules 3 dont les poteaux sont situés sur un cercle centré sur l'axe vertical 13 de la tour 2, qu'entoure une seconde série, dont les unités sont "tangentes" aux unités de la première série et dont les poteaux 5 sont situés équidistants sur un tracé hexagonal. Autour de chaque cellule 3, on retrouve alternativement un poteau 7 recevant les poutres 6 de trois cellules 3 associées et un poteau 9 supportant la dalle triangulaire équilatérale préfabriquée 15 associée, ainsi qu'on le montre en détail en figure 6, à trois éléments profilés.

On se référera maintenant aux figures 5 et 6 montrant la forme des éléments profilés 10 sur lesquels sont empilées les viroles 14 (figure 5) des diffuseurs 8 ; chacun des éléments profilés 10 a une section droite définissant une face extérieure courbe, désignée par 16 sur la figure 5. A sa partie supérieure cette face courbe 16 est limitée par une arête circulaire 17 et à sa partie inférieure par une arête en polygone régulier de côtés 18. On notera que les éléments 10 de deux cellules voisines sont associés le long de l'un respectif de leurs côtés 18 ; par ailleurs, au niveau des poteaux 9, les côtés 18 respectifs de trois éléments 10 voisins sont associés à une dalle préfabriquée 15 supportée par un poteau 9. Au droit des poutres 6, les éléments 10 présentent une extension 22 (figure 5) formant pied d'assise sur la poutre 6 associée. Cette disposition des éléments 10 vise à rétablir la continuité de la section courante en compression et en traction. Les faces supérieures 21 des éléments 10 forment base d'appui des viroles 14 (figure 5).

On signalera, sans l'avoir représenté, que le profil des poutres préfabriquées 6, présente une section d'inertie maximale sur laquelle est reportée la charge de l'ensemble du diffuseur grâce à un gousset en béton armé coulé au sommet des poteaux 7.

La figure 2 est précisément une vue du chapiteau d'un poteau 7 montrant l'implantation des poutres 6 ; celles-ci sont tout d'abord assemblées entre elles sur les poteaux centraux 5 par un noeud en béton armé, leur autre extrémité étant provisoirement boulonnée sur la tête des poteaux extérieurs 7.

Les figures 3 et 4 montrent des détails d'assemblage au niveau de la tour hexagonale centrale 2 ; celle-ci est constituée par des poteaux 11 qu'entourent des voiles en béton armé 19 ; un réseau étoilé de poutres 20 associé aux poteaux 11 supporte une dalle hexagonale 12. Ces poteaux 11 forment également appui pour les poutres 6 venant des poteaux 5 des cellules.

Cet ensemble, très rigide en torsion et en flexion, est destiné à transmettre jusqu'au niveau des fondations les efforts rayonnants de toute direction.

Au voisinage du bord du groupe de ventilation, les éléments se raccordent par un système de poutrelles et de dalles préfabriquées (non représentées) à la poutre de rigidité périphérique. Cette disposition contribue également à conférer à la structure un monolithisme sans solution de continuité.

Bien entendu, l'invention n'est nullement limitée à la forme de réalisation représentée et décrite mais englobe toute variante d'exécution.

1

<u>REVENDICATIONS</u>

1. Réfrigérant atmosphérique à tirage induit du type comportant, séparés par une toiture de raccordement, une ossature extérieure de dispersion en forme de couronne supportant un bassin d'alimentation de même forme, un groupe de ventilation constitué par une ossature intérieure concentrique à la première supportant une pluralité de cellules de ventilateur dont chacune comporte un groupe moteur entouré et surmonté d'un diffuseur en forme de solide de révolution, caractérisé en ce que ladite ossature intérieure est constituée, entre une tour hexagonale centrale (2) et une poutre de rigidité circonférentielle (1) concentriques, celle-ci reposant sur des poteaux uniformément répartis (4), par un plancher monolithique dans lequel sont ménagées les cellules (3) de ventilateur, plancher supportant lesdits diffuseurs (8) et les groupes moteurs et prenant appui sur une pluralité de poteaux préfabriqués à chapiteau (7) situés aux sommets d'un réseau en mailles hexagonales se développant à partir des côtés de ladite tour hexagonale centrale (2).

2. Réfrigérant selon la revendication 1, caractérisé en ce que lesdits groupes moteurs des cellules de ventilateur sont implantés sur des poteaux (5) situés au centre desdites mailles hexagonales selon un réseau à mailles triangulaires équilatérales.

3. Réfrigérant selon la revendication 1 ou 2, caractérisé en ce que chaque cellule (3) de ventilateur, comportant un poteau central (5) support du groupe moteur et étant entourée de six poteaux périphériques (7) implantés aux sommets de la maille hexagonale circonscrite, est constituée par trois poutres préfabriquées (6) assemblées en étoile régulière en partant dudit poteau central vers trois premiers des dits poteaux périphériques et par un élément périphérique profilé (10) formant base circulaire du diffuseur (8) associé.

4. Réfrigérant selon la revendication 3, caractérisé en ce que ledit élément profilé (10) affecte la forme d'un anneau dont la section droite définit une face extérieure courbe (16) limitée par une arête supérieure circulaire (17) et par une arête inférieure polygonale régulière (18), sa face intérieure étant constituée par une pluralité de facettes circonscrites audit anneau.

5. Réfrigérant selon la revendication 3 ou 4, caractérisé en ce que chaque anneau est constitué par l'assemblage d'au moins trois secteurs identiques s'étendant entre deux successives desdites poutres préfabriquées (6).

6. Réfrigérant selon une quelconque des revendications 3 à 5, caractérisé en ce qu'au droit desdites poutres préfabriquées (6) chacun desdits secteurs présente sur sa face inférieure une extension (22) formant pied d'assise sur la poutre associée.

7. Réfrigérant selon une quelconque des revendications 3 à 6, caractérisé en ce que les éléments profilés de deux cellules voisines sont en contact le long d'un côté de leur arête inférieure polygonale.

8. Réfrigérant selon une quelconque des revendications 3 à 7, caractérisé en ce qu'au niveau des trois seconds des dits poteaux périphériques les éléments profilés de trois cellules adjacentes sont associés, par un des côtés de leur arête inférieure polygonale, à une dalle triangulaire équilatérale (15) formant coffrage perdu et reposant sur l'un desdits seconds poteaux périphériques.

9. Réfrigérant selon une quelconque des revendications 3 à 8, caractérisé en ce que lesdits diffuseurs sont constitués chacun par une pluralité de viroles (14) préfabriquées successivement empilées, s'emboîtant l'une sur l'autre, sur les bords des éléments profilés formant base, l'étanchéité des joints étant assurée par un mortier-colle.

10. Réfrigérant selon une quelconque des revendications 3 à 9, caractérisé en ce que, au voisinage de ladite poutre (1) de rigidité circonférentielle, lesdits éléments profilés sont raccordés à cette dernière par un système de poutrelles et de dalles préfabriquées.

11. Réfrigérant selon la revendication 1, caractérisé en ce que ladite tour hexagonale centrale (2), encastrée par ses poteaux sur des pieux de fondation, est constituée par des voiles de béton armé et fermée à sa partie supérieure par une dalle (12).

FIG. 1

FIG. 3

FIG. 2

FIG. 4

0021947

1/2

FIG.5

FIG.6

## Office européen des brevets

## RAPPORT DE RECHERCHE EUROPEENNE

EP 80 40 0840

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - A - 2 236 155 (MARLEY COMP.)<br>* Page 10, lignes 10-14; figure 1 *<br><br>-- | 1 | E 04 H 5/12<br>F 28 C 1/00 |
| | GB - A - 582 727 (BLANCZIK)<br>* Page 4, lignes 80-90; page 6, lignes 29-35; figure 3 *<br><br>-- | 1 | |
| | GB - A - 450 022 (MOUCHEL)<br>* Page 4, lignes 17-37; figure 1 *<br><br>---- | 1 | DOMAINES TECHNIQUES RECHERCHES (Int. Cl. 3)<br><br>E 04 H<br>F 28 C |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 01-10-1980 | DALL'ANESE |

OEB Form 1503.1 06.78